Europäisches Patentamt

European Patent Office

Office européen des brevets

Veröffentlichungsnummer: **0 274 628**
**A2**

# EUROPÄISCHE PATENTANMELDUNG

Anmeldenummer: 87117427.2

Int. Cl.⁴: **B29C 63/02**

Anmeldetag: 24.09.85

Priorität: 29.09.84 DE 3435906

Veröffentlichungstag der Anmeldung:
**20.07.88 Patentblatt 88/29**

Veröffentlichungsnummer der früheren
Anmeldung nach Art. 76 EPÜ: **0 176 918**

Benannte Vertragsstaaten:
**AT BE CH DE FR GB IT LI NL SE**

Anmelder: **Baus, Heinz Georg**
**Wartbodenstrasse 35**
**CH-3626 Hünibach-Thun(CH)**

Erfinder: **Baus, Heinz Georg**
**Wartbodenstrasse 35**
**CH-3626 Hünibach-Thun(CH)**

Vertreter: **Klose, Hans, Dipl.-Phys. et al**
**Kurfürstenstrasse 32**
**D-6700 Ludwigshafen(DE)**

Vorrichtung zum Aufbringen einer Schutzfolie auf ein Bauteil.

Eine Vorrichtung zum Aufbringen einer Schutzfolie (18) auf ein Bauteil, das insbesondere aus einem thermoplastischen Kunststoff besteht, enthält eine Rolle (8), von welcher die Schutzfolie (18) abwickelbar ist und mittels einer Andruckrolle (13) auf das Bauteil aufgebracht werden kann. Es soll die Aufgabe gelöst werden, bei einfacher Konstruktion die Schutzfolie derart auf dem Bauteil anzuordnen, daß nachfolgend Teilbereiche der Schutzfolie wieder von dem Bauteil abgelöst werden kann. Zur Lösung wird vorgeschlagen, daß das Bauteil von Walzen (2 -4) in Form einer Bahn (5) in den Zufuhrspalt (6) von zwei Andruckrollen (13) eingeführt wird. In den Zufuhrspalt (6) wird gleichzeitig auch die Schutzfolie (15) eingeführt und dort mit der kontinuierlich gelieferten Bahn (5) verbunden. Ferner ist eine Schneidvorrichtung (12) vorgesehen, um die Bahn gemeinsam mit der Schutzfolie (18) in Platten (14) zu schneiden, die in Längsrichtung und/oder Querrichtung eine Anzahl von Perforationslinien aufweisen.

Fig.1

## Vorrichtung zum Aufbringen einer Schutzfolie auf ein Bauteil

Die Erfindung bezieht sich auf eine Vorrichtung zum Aufbringen einer Schutzfolie auf ein Bauteile gemäß dem Oberbegriff des Patentanspruchs 1.

In der US-A-36 74 590 ist eine derartige Vorrichtung beschrieben, um Stäbe mit einer Schutzfolie zu umwickeln. Es werden einzelne, auf eine vorgegebene Länge geschnittene Stäbe einem Förderband zugeführt. Mittels der Vorrichtung wird die Schutzfolie von einer Rolle abgewickelt und mit quer zur Längsrichtung verlaufenden Perforationslinien versehen. Die Abstände dieser Perforationslinien müssen exakt den Längen der zugeführten Stäbe entsprechen. Die derart vorbereitete Schutzfolie wird nachfolgend mittels Druckrollen auf die dicht hintereinander der Vorrichtung zugeführten Stäbe aufgebracht. Die Abzugsgeschwindigkeit der Rolle mit der Schutzfolie, die Drehzahl der rotierenden Messer zum Einbringen der Perforationslinien und ferner das Transportband mit den zuzuführenden Stäben müssen exakt synchronisiert sein und es sind darüber hinaus zusätzliche Maßnahmen notwendig, damit die Perforations linien genau mit den jeweiligen Enden der einzelnen Stäbe übereinstimmen. Die Stäbe werden nicht nur auf der Oberfläche, sondern auch an der Seite und an der Unterfläche mit der Schutzfolie umwickelt. Die derart umwickelten Stäbe werden dann einem weiteren Transportband mit erhöhter Fördergeschwindigkeit zugeführt, so daß die Schutzfolie entlang den Perforationslinien, die genau mit den Enden der Stäbe übereinstimmen müssen, abreißt. Die derart umwickelten Stäbe weisen in der Schutzfolie keinerlei Perforationslinien auf. Die Schutzfolie dient zur dauerhaften Beschichtung der Stäbe und nachfolgend werden keinerlei Teilbereiche der Schutzfolie wieder von den Stäben gelöst. Die Schutzfolie wird lediglich entsprechend der jeweiligen Länge der Stäbe mit Trennungslinien versehen, die exakt den dicht aneinander liegenden Endflächen der zugeführten Stäbe zugeordnet werden.

Platten aus thermoplastischem Kunststoff gelangen in den unterschiedlichsten Bereichen zum Einsatz, wobei aufgrund der relativ weichen Oberfläche die Gefahr von Beschädigungen durch Kratzer o.ä. gegeben ist. Diese Platten werden daher oftmals bei der Herstellung mit einer geeigneten Schutzfolie versehen, die jedoch bei der Weiterverarbeitung der Platte sehr störend ist. Muß die Platte beispielsweise in einen Rahmen eingebaut werden, so muß zuvor die Schutzfolie abgelöst werden. Anderenfalls ergeben sich Schwierigkeiten, wenn Reste zwischen Rahmen und Platte haften bleiben; ggfs. können solche Reste nur mit einem erheblichen Aufwand entfernt werden. Von besonderer Bedeutung ist das ordnungsgemäße Ablösen in solchen Fällen, in welchen die Platte von dem Rahmen dicht und zuverlässig gehalten werden muß. Dies gilt insbesondere im Zusammenhang mit Duschtrennwänden, bei welchen die Platten von Tür-oder Wandelementen aus in der Regel transparentem Kunststoffmaterial bestehen und von geeigneten Rahmenprofilen umgeben und gehalten sind. Durch undichte Stellen zwischen Platten und Rahmen ist die Funktionsfähigkeit einer Duschabtrennung insgesamt in Frage gestellt. Wird die Platte nach dem Einbau in einen Rahmen nachträglich mit einer Schutzfolie versehen, um während des Transports sowie der Montage Beschädigungen zu vermeiden, so ist das Aufbringen der Schutzfolie auf die im Rahmen eingefaßte Platte mit einem nicht unwesentlichen Kostenaufwand verbunden. So sei daran erinnert, daß bei einer Duschabtrennung je nach Kundenwunsch die Seitenwände oder Türen recht verschiedene Maße aufweisen; im Hinblick auf die Lagerhaltung von Schutzfolien ist insoweit ein erheblicher Aufwand erforderlich. Schließlich sei auf die nicht unerheblichen Personalkosten hingewiesen, die im Zusammenhang mit dem nachträglichen Aufbringen einer Schutzfolie anfallen.

Der Erfindung liegt daher die Aufgabe zugrunde, die Vorrichtung der genannten Art dahingehend weiterzubilden, daß ein geringer Material-und Kostenaufwand zum Aufbringen und Perforieren erforderlich ist. Die Vorrichtung soll mit wenigen Bauteilen und bei platz-und gewichtssparender Bauweise zum einen eine zuverlässige Perforierung der Schutzfolie ermöglichen und andererseits die perforierte Schutzfolie funktionsgerecht mit einer Bahn in einen kontinuierlichen Produktionsprozeß verbinden, um nachfolgend die Platten auf das geforderte Maß zurechtschneiden zu können. Die Herstellung der Platten soll in gewohnter Weise mit herkömmlichen Maschinen, wie Extrudern, Walzenanordnungen o.ä. erfolgen können, wobei nur ein geringer zusätzlicher apparativer Aufwand im Hinblick auf die Schutzfolie notwendig sein soll. Die Platte soll von der Herstellung bis zum Endverbraucher hin weitestmöglich vor Beschädigungen geschützt sein, wobei in einfacher Weise Bereiche der Platte, die für eine Weiterverarbeitung zugänglich sein müssen, leicht und ohne wesentlichen Zeit-und Arbeitsaufwand freigelegt werden sollen.

Die Lösung dieser neu aufgefundenen Aufgabe erfolgt gemäß den im Kennzeichen des Patentanspruchs 1 angegebenen Merkmalen.

Die vorgeschlagene Vorrichtung enthält eine an sich bekannte Walzenanordnung, welcher ein Extruder oder dergleichen zur Lieferung einer Bahn, insbesondere aus einem thermoplastischen Kunststoff, vorgeschaltet ist. Diese Bahn wird in einem kontinuierlichen Verfahren, ohen daß zuvor eine Unterteilung er folgt, noch im warmen Zustand mit der perforierten Schutzfolie versehen. Zum Aufbringen dieser perforieten Schutzfolie auf die insbesondere noch warmen Bahn ist wenigstens eine Andruckrolle vorgesehen, wobei die Schutzfolie zusammen mit dieser Bahn zweckmäßig durch einen Spalt zwischen zwei derartigen Walzen hindurchgeführt wird. Aufgrund der noch relativ weichen Oberfläche bzw. der noch relativ warmen Bahn wird eine besonders gute Haftung der perforierten Schutzfolie auf der Oberfläche der Bahn erreicht. Zusätzliche Klebestoffe oder dergleichen gelangen nicht zum Einsatz, so daß auch die Oberfläche der Bahn insoweit unverändert bleibt. Nach dem Aufbringen der perforierten Schutzfolie auf die praktisch im Endlosverfahren gelieferte Bahn werden die Schutzfolie und die Bahn einer Schneidvorrichtung zugeführt, mittels welcher in der geforderten Weise die Platten auf Maß geschnitten werden. Eine Synchronisation von Schutzfolie einerseits und Bahn bzw. Schneidvorrichtung andererseits ist nicht erforderlich. Es ist eine Vielzahl von Perforationslinien über die Gesamtlänge der Platten verteilt, damit bei der weiteren Verarbeitung Teilbereiche dieser Schutzfolie wieder von den Platten bedarfsweise abgelöst werden können. Im Rahmen der Erfindung wird die Schutzfolie vor dem Zurechtschneiden der Platten auf die Bahn in einem kontinuierlichen Arbeitsprozeß aufgebracht und erst nachfolgend wird die Bahn gemeinsam mit der Schutzfolie mit der Schneidvorrichtung auf das geforderte Maß in Platten unterteilt.

In einer besonderen Ausgestaltung wird die Perforiereinrichtun derart angeordnet, daß die beim Perforieren entstehenden Grate in der von der Bahn abgewandten Seite der Schutzfolie nach außen zu liegen kommen. Eine Beschädigung der Bahn bzw. Platte durch Grate der Perforationslinien wird folglich in überraschend einfacher Weise vermieden.

Die vorgeschlagene Vorrichtung ermöglicht mit einem geringen Aufwand die Herstellung von Platten, wobei bis zum Endverbraucher ein größtmöglicher Schutz der Oberfläche der Platten erreicht wird. Bei der Weiterverarbeitung der Platte wird die Schutzfolie entlang der Perforation teilweise von der Platte abgelöst, so daß dort Beschläge, Rahmenprofile o.ä. angebracht werden können, ohne daß irgendeine Beeinträchtigung der Funktionsfähigkeit durch die Schutzfolie oder Reste derselben zu befürchten ist. Im übrigen bleibt aber die Platte mittels der Schutzfolie geschützt und erste nach dem endgültigen Einbau und Montage der Platte einschließlich Beschläge, Rahmen o.ä. wird vorort die Schutzfolie nunmehr restlos von der Oberfläche gelöst. Erfindungsgemäß ist die Perforation derart ausgebildet, daß die zum Ablösen eines Streifens oder Teiles der Schutzfolie von der Platte benötigte Kraft kleiner ist als die Adhäsions-oder Haltekraft der auf der Platte befindlichen Schutzfolie. Mit anderen Worten, beim Ablösen wird nur der gewünschte Teil von der Platte gelöst, während die übrigen Teile oder Bereiche der Schutzfolie unverändert auf der Platte haften bleiben.

Die Vorrichtung gelangt bevorzugt bei der Herstellung von Platten für Duschabtrennungen zum Einsatz, zumal gerade bei solchen Duschabtrennungen einerseits eine hohe Dichtigkeit zwischen Rahmen und Platte und andererseits ein optimaler Oberflächenschutz der Platten bis an den Einbauort in eine Dusche oder in einem Bad erreicht werden muß. Bevor die auf Maß geschnittenen Platten in einen Rahmen eingesetzt werden, werden an den Rändern entlang der Perforation in einfacher Weise Teile der Schutzfolie abgezogen, während der überwiegende Teile der Platte auch und gerade beim Anbringen der Rahmen vor Beschädigungen und insbesondere vor Kratzern in der Oberfläche geschützt bleibt. Die bisher erforderlichen Maßnahmen für einen nachträglichen Schutz der Platten bzw. für eine entsprechend aufwendige Verpackung entfallen, wobei andererseits der für die Herstellung der Perforation erforderliche Aufwand in der Praxis nahezu vernachlässigbar ist. Dies gilt umso mehr, als die Platten heute in der Regel mittels Extrudern und nachgeschalteten Walzenanordnungen produziert werden und das Aufbringen einer perforierten Schutzfolie auf die zunächst noch warme Oberfläche der endlosen Bahn, also vor dem Zurechtschneiden auf Plattengröße, einen äußerst geringen zusätzlichen Aufwand erfordert.

In einer besonders wesentlichen Ausgestaltung wird die Perforation in die Schutzfolie unmittelbar vor dem Aufbringen auf die Platte oder die Bahn eingebracht. Die Schutzfolie kann als übliche Rollenware vom Lieferanten bezogen werden, und ein zusätzlicher Aufwand entfällt insoweit. Die Perforation wird entsprechend der Größe der Bahn oder der Platte an der gewünschten Stelle eingebracht, wobei ohne Schwierigkeiten Änderungen vorgenommen werden können. Es brauchen lediglich die zur Perforation vorgesehenen Einrichtungen in Form von Messern o.ä. auf die jeweils erforderliche Position gefahren zu werden.

Um in zuverlässiger Weise eine Beschädigung der Oberfläche der Platte bzw. Bahn durch die Perforation zu vermeiden, wird in einer wesentlichen Ausführungsform vorgeschlagen, daß die Schutzfolie mit der Innenfläche, in welche eine Perforiereinrichtung beim Perforieren zunächst einschneidet, auf die Oberfläche der Platte bzw. Bahn aufgebracht wird. Obgleich die Schutzfolien aus einem relativ weichen Material bestehen, können sich beim Perforieren auf der von der Perforiereinrichtung abgewandten Seite Grate bilden, die über diese andere Oberfläche bzw. Außenfläche der Schutzfolie etwas hervorstehen. Im Rahmen der Erfindung wird nicht die Außenfläche mit Graten auf die Platte aufgebracht, sondern die Schutzfolie wird mit ihrer, abgesehen von den Perforationen, glatten Innenfläche auf die Platte bzw. Bahn aufgebracht. Dies ist besonders wichtig, da die Bahn bzw. Platte aus extrudierbarem Kunststoff bei der kontinuierlichen Fertigung eine u. U. noch relativ weiche Oberfläche aufweisen kann, die durch die genannten Grate der Perforation leicht beschädigt werden würde. Durch die vorgeschlagene Anordnung der Schutzfolie auf der Bahn bzw. Platte werden in überraschend einfacher Weise derartige Beschädigungen zuverlässig vermieden.

Nach einer besonderen Ausführung wird die Schutzfolie auf beide Seiten bzw. Oberflächen der Bahn oder Platte aufge bracht. Es sei festgehalten, daß erfindungsgemäß auch nur eine einzige Oberfläche mit einer perforierten Schutzfolie versehen werden kann. Dies gilt beispielsweise für solche Platten, die eine aufgerauhte Oberfläche aufweisen, wobei kleine Kratzer oder Beschädigungen einer solchen Oberfläche ggfs. in Kauf genommen werden; nur die Oberfläche der Platte, die insbesondere eine glatte Oberflächenstruktur aufweist, wird dann mit der Schutzfolie zu schützen sein. Andererseits hat es sich aber als besonders zweckmäßig erwiesen, die Platte mit ihren beiden Seiten bzw. Oberflächen mittels der erfindungsgemäß vorgeschlagenen Schutzfolie zu schützen, zumal der hierdurch bedingte Fertigungsaufwand überraschend klein gehalten werden kann.

Gemäß einer anderen Weiterbildung ist das Längenverhältnis von Löchern zu Stegen, die zwischen zwei benachbarten Löchern der Perforation liegen, größer als 2:1, und bevorzugt 3:1. Durch die Vorgabe des Längenverhältnisses wird in besonders einfacher Weise sichergestellt, daß beim Ablösen eines Teiles der Schutzfolie nur der gewünschte Teile oder Streifen abgelöst wird und im übrigen die Schutzfolie auf der Platte haften bleibt. Die zum Ablösen erforderliche Abreißkraft ist also kleiner als die Widerstandskraft zum Ablösen des verbleibenden Teiles der Schutzfolie von der Platte.

In einer besonderen Weiterbildung sind eine Anzahl von in Längsrichtung der Schutzfolie verlaufende Perforationen vorgesehen, die einen vorwählbaren Abstand zueinander aufweisen. Mittels der Peforationen ist also die Schutzfolie in Streifen unterteilt, so daß bei der Verarbeitung der Platte bei Bedarf einzelne Streifen von der Platte gelöst werden können, um dort beispielsweise Rahmenprofile o.ä. anzubringen. Die Abstände der Perforationen und somit die Breite der Streifen kann den Erfordernissen entsprechend vorgewählt werden, wobei in der Praxis Breiten von etwa 30 oder 40 mm besonders vorteilhaft sich erwiesen haben.

Nach einer anderen Ausführungsform werden in Querrichtung der Schutzfolie eine Anzahl von Perforationen vorgesehen, die einen vorgegebenen Abstand zueinander aufweisen. Auch insoweit ergeben sich keine besonderen Schwierigkeiten bei der Einbringung der Perforationen in die Schutzfolie. In Verbindung mit den oben genannten, in Längsrichtung verlaufenden Perforationen kann die Schutzfolie bevorzugt in eine Vielzahl von Rechtecken oder Quadraten perforiert sein und bei der Weiterverarbeitung der Platte können ohne Schwierigkeiten auch nur einzelne Rechtecke bzw. Quadrate abgelöst werden. Diese Maßnahmen sind dann von besonderem Nutzen, wenn beispielsweise bei Beschlägen nur Teilbereiche der Platte benötigt werden, oder alle vier Ränder der Platte in einem Rahmen eingefaßt werden.

Besonders vorteilhaft ist es im Rahmen dieser Erfindung, zwei Andrückrollen vorzusehen und dem Zuführspalt gemeinsam sowohl die Bahn als auch zu beiden Seiten derselben jeweils eine Schutzfolie zuzuführen. In einem einzigen Arbeitsgang werden somit beide Flächen der Bahn mit jeweils einer Schutzfolie versehen. Ferner stehen im Rahmen der Erfindung die Walzenanordnung, mit welcher die Bahn gefertigt wird und die Andrückrollen derart nahe beieinander, daß die in der gerade gefertigten Bahn noch vorhandene Restwärme zum Verbinden der Schutzfolie genutzt wird. Zusätzliche Heizeinrichtungen werden vermieden und die Energiekosten insgesamt erheblich reduziert. Darüberhinaus kann auch der Anpreßdruck der Andruckrolle sehr gering gehalten werden, so daß Beschädigungen und Deformationen der Oberflächenschicht der gefertigten Bahn oder Platte vermieden werden.

In einer besonderen Ausgestaltung ist die Perforiereinrichtung derart angeordnet, daß die Perforation von der Innenfläche der Schutzfolie her eingebracht wird, wobei diese Innenfläche nachfolgend auf die Oberfläche der Bahn zu liegen kommt. Somit werden Beschädigungen der Bahn oder Platte durch Grate oder dergleichen vermieden. Insoweit ist es sinnvoll, der Perforiereinrichtung eine Umlenkrolle zuzuordnen, wobei die Umlenkrolle sich in unmittelbarer Nähe der Bahn sowie der Andrückrolle befindet, während die Perforiereinrichtung auf der der Bahn abgewandten Seite der Umlenkrolle angeordnet wird. Mittels der Umlenkrolle wird die peforierte Schutzfolie definiert zum Zuführspalt der Andrückrolle bzw. des Andruckrollenpaares geleitet, während auf der anderen Seite die Umlenkrolle in Verbindung mit der Perforiereinrichtung zuverlässig die Perforierung der Schutzfolie gewährleistet.

Die Erfindung wird anhand von in der Zeichnung dargestellten Ausführungsbeispielen näher erläutert. Es zeigen:

Fig. 1 eine schematische Darstellung der Vorrichtung,

Fig. 2 eine Platte, deren Schutzfolien durch eine Anzahl von Perforationen in Streifen unterteilt ist,

Fig. 3 ein mit der Platte gemäß Fig. 2 gefertigtes Bauteil,

Fig. 4 eine Platte, deren Schutzfolie durch Perforationen in quadratische Bereiche unterteilt ist,

Fig. 5 ein mit der Platte gemäß Fig. 4 gefertigtes Bauteil.

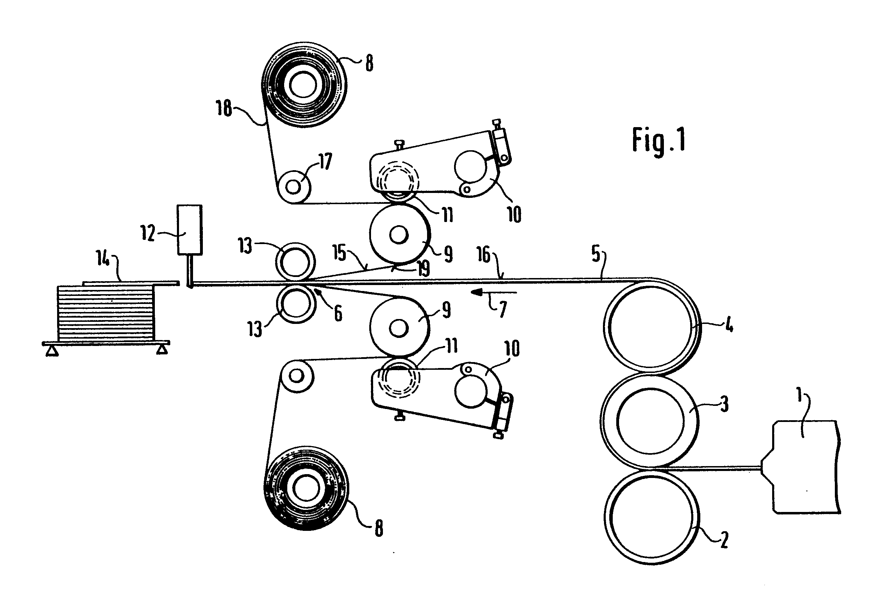

Fig. 1 zeigt eine schematische Darstellung einer erfindungsgemäßen Vorrichtung, die einen Extruder 1 sowie eine Walzenanordnung zur Lieferung einer Bahn 5 aus einem thermoplastischen Kunststoff enthält. Die Walzenanordnung enthält drei vertikal übereinander angeordnete Walzen, und zwar eine untere Andruckwalze 2, eine mittlere Prägewalze 3 sowie eine obere Glättwalze 4. Von der Glättwalze 4 wird horizontal die derart gefertigte Kunststoff-Bahn 5 abgezogen. Die Bahn 5 wird in Richtung des Pfeiles 7 gefördert und im Zuführspalt 6 zweier Andruckrollen 13 mit je einer Schutzfolie 18 versehen, die von Rollen 8 abgewickelt werden. Der Abzug der Schutzfolie 18 von der Rolle 8 sowie Extruder und Walzenanordnung und Andruckrollen 13 sind in ihren Abzugsgeschwindigkeiten aufeinander abge stimmt. Die Bahn 5 wird gemeinsam mit den beiden Schutzfolien 18 in den Zuführspalt 6 eingeführt, wobei mittels der Andruckrollen 13 9 der erforderliche Anpressdruck aufgebracht wird.

Bei der dargestellten Ausführungsform wird die Bahn 5 auf ihren beiden Oberflächen, also auf der oberen und unteren Oberfläche, jeweils mit der Schutzfolie 18 versehen. Das Andruckrollenpaar 13 ist erfindungsgemäß derart nahe der Walzenanordnung mit den Walzen 2, 3 und 4 aufgestellt, daß die in der Bahn noch befindliche Restwärme beim Aufbringen genutzt werden kann. Die beiden Schutzfolien 18 und die Bahn 5 werden gemeinsam dem Zuführspalt 6 gleichzeitig zugeführt, wobei durch die paarweise Anordnung und Ausnutzung der Restwärme auch nur ein relativ geringer Anpreßdruck erforderlich wird.

Mittels einer Einrichtung 10 wird die zunächst geschlossene Schutzfolie 18 vor dem Aufbringen auf die Bahn 5 mit einer Peforation versehen. Hierfür enthält die Einrichtung 10 geeignete Messer 11 oder dergleichen, wobei die Perforation je nach Wunsch in Längsrichtung, und/oder auch in Querrichtung der Schutzfolie 18 aufgebracht werden kann.

Die beiden Perforiereinrichtungen 10 und Rollen usw. sind übereinstimmend ausgebildet, ebenso wie je eine Umlenkrolle 9, die nahe der Bahn 5 angeordnet sind. Die Umlenkrolle 9 befindet sich zwischen dem Messer 11 und der Bahn 5. Wichtig ist im Rahmen der Erfindung das Einbringen der Perforation von der Innenfläche 19 der Schutzfolie her, welche Innenfläche 19 direkt auf die Oberfläche 16 der Bahn 5 angeordnet wird. Beim Perforieren der zwar sehr dünnen Schutzfolie 18 entstehen nämlich auf der Außenfläche 15 aufgrund der von der Innenseite 19 her durchdringenden Messer oder dergleichen Grate oder Erhebungen. Würden derartige Grate auf die noch relativ warme Oberfläche der Bahn 5 mittels der Andruckrollen 13 angedrückt, so ließen sich Beschädigungen in der Oberfläche der Bahn 5 und somit der zu fertigenden Platte kaum vermeiden. Ferner wird durch die vorgeschlagene Anordnung von Umlenkrolle 9, Schneidvorrichtung 10 sowie Andruckrollen 13 eine äußerst kompakte und platzsparende Bauweise geschaffen. Im Rahmen dieser Erfindung werden die Umlenkrollen 9, die Schneidvorrichtung 10 die Andruckrollen 13 und gegebenenfalls auch eine Zuführwalze 17 in einem gemeinsamen Maschinengerüst, das hier aus Gründen der Übersichtlichkeit nicht dargestellt ist, angeordnet. Es sei festgehalten, daß im Rahmen dieser Erfindung sämtliche Walzen, also sowohl für die von oben als auch für die von unten zuzuführende Schutzfolie in einem gemeinsamen Maschinengestell angeordnet sind. Mittels einer nachgeordneten Schneidvorrichtung 12 wird dann in hinlänglich bekannter Weise die Bahn 5 einschließlich der Schutzfolie 18 in Platten 14 der gewünschten Größe geschnitten.

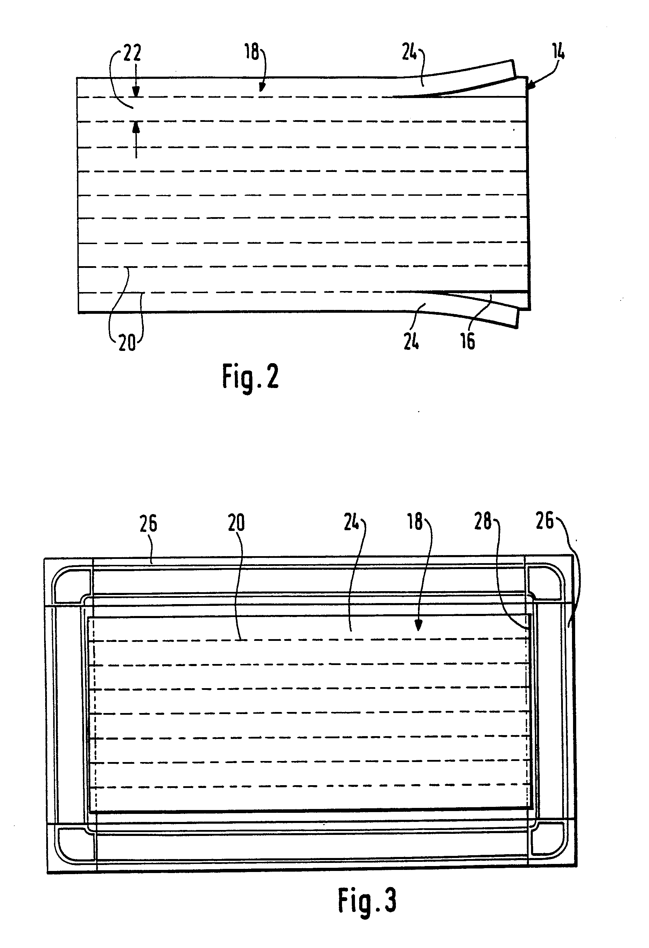

Fig. 2 zeigt eine Aufsicht auf eine Platte 14, auf deren Oberfläche 16 eine Schutzfolie 18 aufgebracht ist. Die Schutzfolie 18 weist eine Anzahl von Peforationen 20 auf, die in Längsrichtung der Platte 14 verlaufen und die zueinander einen vorgegebenen Abstand 22 aufweisen. Aufgrund der Perforationen 20 ist also die Schutzfolie 18 in eine Anzahl von Streifen 24 unterteilt, wobei gemäß Zeichnung die beiden äußeren Streifen 24 teilweise abgelöst sind.

Fig. 3 zeigt ein Bauteil, das einen Rahmen 26 aus vier rechtwinklig zueinander angeordneten Profilschienen aufweist. Die anhand von Fig. 2 erläuterte Platte ist in den Rahmen 26 in bekannter Weise eingebaut, wobei die oben erwähnten beiden äußeren Streifen der Schutzfolie 18 zuvor entfernt worden sind. Die Enden 28 der Schutzfolie 18 sind über die in der Zeichnung links und rechts befindlichen Profilschienen des Rahmens 26 gelegt.

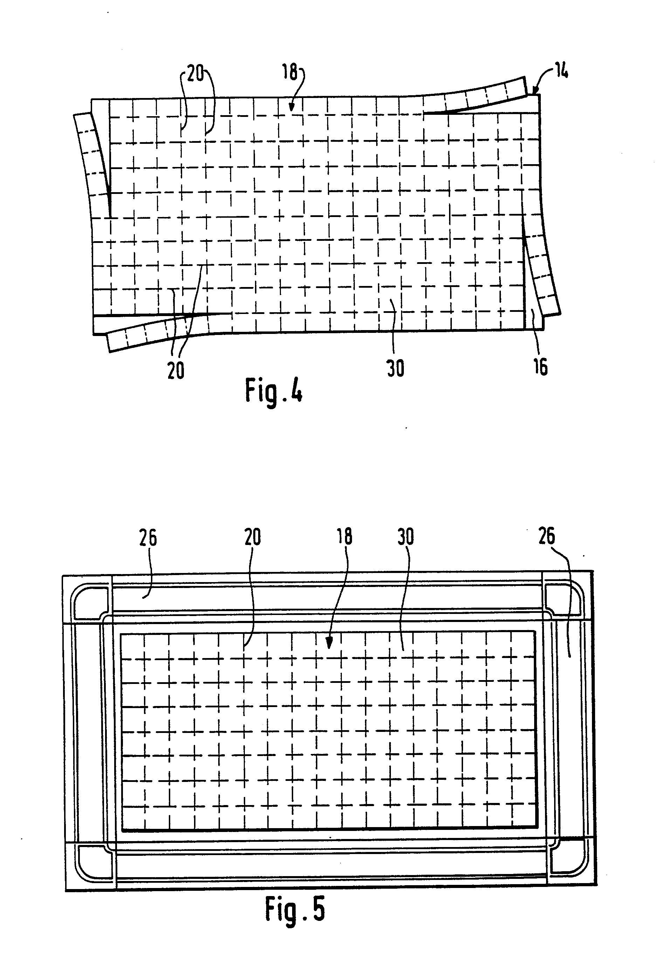

Fig. 4 zeigt eine Ausführungsform der Platte, wobei nunmehr auch in Querrichtung der Platte die Schutzfolie 18 mit Perforationen 20 versehen ist. Aufgrund der in Längs-sowie in Querrichtung der Platte 14 vorhandenen Perforationen 20 ist die Schutzfolie 18 in quadratische Teilbereiche 30 unterteilt. Es bedarf keiner besonderen Hervorhebung, daß die Abstände der Perforationen 20 in Quer-bzw. Längsrichtung den Erfordernis sen entsprechend variiert werden können, wobei ggfs. auch rechteckförmige Teilbereiche 30 vorhanden sind.

Schließlich zeigt Fig. 5 ein Bauteil mit einer Platte gemäß Fig. 4. Von der Schutzfolie 18 wurden vorm Einsetzen der Platte 14 in den Rahmen 26 sowohl an den Stirnseiten als auch an den Längsseiten jeweils ein Streifen abgelöst. Der Rahmen 26 liegt also in der erforderlichen Weise dicht an die Oberfläche der Platte an, so daß in überraschend einfacher Weise einerseits eine dichte und zuverlässige Befestigung der Platte im Rahmen 26 und andererseits ein zuverlässiger Schutz der Platte 14 auch bei der weiteren Bearbeitung bis zum Endverbraucher gewährleistet ist.

Bezugszeichenliste

1 Extruder
2,3,4 Walzen
5 Bahn
6 Zuführspalt
7 Pfeil
8 Rolle
9 Umlenkrolle
10 Einrichtung
11 Messer
12 Schneidvorrichtung
13 Andruckrolle
14 Platte
15 Außenfläche
16 Oberfläche
17 Zufuhrwalze
18 Schutzfolie
19 Innenfläche
20 Perforation
22 Abstand
24 Streifen
26 Rahmen
28 Ende
30 Teilbereich

**Ansprüche**

1. Vorrichtung zum Aufbringen einer Schutzfolie (18) auf die Oberfläche (16) eines Bauteiles, das insbesondere aus einem thermoplatischen Werkstoff besteht, enthaltend eine Rolle (8) von welcher die Schutzfolie (18) abgezogen und mittels einer Andruckrolle (13) auf das Bauteil angedrückt wird, dadurch gekennzeichnet, daß Walzen (2 - 4) zum Zuführen des Bauteiles, das als eine Bahn (5) ausgebildet ist, vorgesehen sind, daß die Bahn (5) und die Schutzfolie (18) gemeinsam in einen Zuführspalt (6) zwischen zwei Andruckrollen (13) eingeführt werden und daß nachfolgend mittels einer Schneidvorrichtung (12) die Bahn (5) und die Schutzfolie (18) gemeinsam in Platten (14) unterteilt werden, wobei jede Platte (14) eine Anzahl von in Längsrichtung und/oder in Querrichtung gleichmäßig beabstandeten Perforationslinien (20) aufweist.

2. Vorrichtung nach Anspruch 1, wobei eine Perforiereinrichtung (10) zum Einbringen der Perforationslinien (20) in die Schutzfolie (18) vorgesehen ist, dadurch gekennzeichnet, daß mittels der Perforiereinrichtung (10) die Perforationslinien (20) in die Innenseite (19) eingebracht werden, wobei die von der Innenseite (19) her in Abständen zueinander eingebrachten Perforationslinien (20) in Längsrichtung und/oder Querrichtung über die Oberfläche der Bahn (5) verlaufen.

3. Vorrichtung nach Anspruch 1 oder 2, dadurch gekennzeichnet, daß der Perforiereinrichtung (10) eine Umlenkrolle (9) zugeordnet ist, welche zwischen der Perforiereinrichtung (10) und dem Zuführspalt (6) angeordnet ist, wobei von der Umlenkrolle (9) die perforierte Schutzfolie (18) dem Zuführspalt (6) zwischen den Andruckrollen (13) zugeführt wird.

4. Vorrichtung nach einem der Ansprüche 1 bis 3, dadurch gekennzeichnet, daß mit der Bahn (5) zwei Schutzfolien (15) dem Zuführspalt (6) zwischen den Andruckrollen (13) zugeführt werden, um beide Oberflächen (16) der Bahn (5) jeweils mit einer der genannten Schutzfolien zu versehen.

5. Vorrichtung nach einem der Ansprüche 1 bis 4, dadurch gekennzeichnet, daß die Perforationslinien (20) ein Längenverhältnis von Löchern zu Stegen aufweist, die zwischen den Löchern liegen, das größer als 2:1 ist und bevorzugt bei 3:1 liegt.

6. Vorrichtung nach einem der Ansprüche 1 bis 5, dadurch gekennzeichnet, daß die Rolle (8) mit der Schutzfolie (18) die Andruckrollen (13) sowie die Einrichtung (11) zum Einbringen der Perforationslinien in einem gemeinsamen Maschinengestell angeordnet sind.

Fig.1

0 274 628

Fig. 2

Fig. 3

Fig. 4

Fig. 5